# EUROPÄISCHE PATENTSCHRIFT

(11) **EP 1 381 785 B1**
(45) Veröffentlichungstag und Bekanntmachung des Hinweises auf die Patenterteilung: **21.05.2008**
(21) Anmeldenummer: 02730181.1
(22) Anmeldetag: 19.04.2002
(51) Int. Cl.: F16B 37/06, B23P 19/06

(54) **FUNKTIONSELEMENT ZUR ANBRINGUNG AN EIN BLECHTEIL, AUS DIESEN HERGESTELLTES ZUSAMMENBAUTEIL SOWIE VERFAHREN ZUR ANBRINGUNG DES FUNKTIONSELEMENTS AN EIN BLECHTEIL**
FUNCTIONAL ELEMENT FOR FIXING TO A PIECE OF SHEET METAL, COMPONENT ASSEMBLED FROM THE ABOVE AND METHOD FOR FIXING THE FUNCTIONAL ELEMENT TO A PIECE OF SHEET METAL
ELEMENT FONCTIONNEL DESTINE A ETRE FIXE SUR UNE PIECE EN TOLE, STRUCTURE AINSI FABRIQUEE ET PROCEDE DE FIXATION DUDIT ELEMENT FONCTIONNEL SUR UNE PIECE EN TOLE

(30) Priorität: 20.04.2001 DE 10119505
(43) Veröffentlichungstag der Anmeldung: 21.01.2004
(73) Patentinhaber: Profil Verbindungstechnik GmbH & Co. KG, 61381 Friedrichsdorf (DE)
(72) Erfinder: BABEJ, Jiri, 35423 Lich (DE); HOESSRICH, Wolfgang, 61476 Kronberg (DE)
(74) Vertreter: Manitz, Finsterwald & Partner GbR
(86) Internationale Anmeldenummer: PCT/EP2002/004365
(87) Internationale Veröffentlichungsnummer: WO 2002/086337

(56) Entgegenhaltungen:
- EP-A- 0 713 982
- US-A- 5 309 618
- US-A- 5 564 873
- US-A- 5 722 139

## Beschreibung

Die vorliegende Erfindung betrifft ein Funktionselement zur Anbringung an ein Blechteil, wie beispielsweise Mutterelement oder Bolzenelement mit einem Körperteil bzw. Kopfteil, das einen Ringflansch aufweist sowie ein aus dem Funktionselement und einem Blechteil hergestelltes Zusammenbauteil und ein Verfahren zur Anbringung des Funktionselements an ein Blechteil.

Ein Funktionselement der eingangs genannten Art wird von der Firma Profil Verbindungstechnik GmbH & Co. KG, Friedrichsdorf, Deutschland unter der Bezeichnung EMF in der Form eines Mutterelements angeboten. Mit diesem Element kann ein Bauteil auf der dem Ringflansch abgewandten Seite des Blechteils an diesem angebracht werden, und zwar mittels eines Schraubbolzens, der in das Gewinde des Mutterelements eingreift und das Bauteil und das Blechteil gegeneinander verspannt. Das Element wird an ein Blechteil mittels des Verfahrens angebracht, das in der EP-A-0 713 982 im Zusammenhang mit deren Fig. 16 und 17 beschrieben ist, wobei dieses Verfahren für sich in der entsprechenden europäischen Teilanmeldung EP-A-0 922 866 beansprucht ist. Ein Funktionselement der eingangs genannten Art in Form eines Bolzenelements ist ebenfalls bekannt, und zwar in Form des sogenannten SBF Bolzenelements der Firma Profil Verbindungstechnik GmbH & Co. KG, das unter anderem im deutschen Patent 3447006 zusammen mit dem dazugehörigen Anbringungsverfahren beschrieben ist. Sowohl das EMF Element als auch das SBF Element haben sich in der Praxis bewährt. Bei dem EMF Element wird das Blechteil nur unwesentlich verformt und bleibt im Bereich der Anbringung des Funktionselements zumindest im wesentlichen in der gleichen Ebene wie das umliegende Blechmaterial.

Ein Beispiel für ein Funktionselement bzw. ein Zusammenbauteil der eingangs genannten Art ist der US-A-5,564,873 zu entnehmen.
Bei dieser Schrift liegt aber zwischen dem Ringflansch und dem Nietabschnitt als Übergang vom Ringflansch in den Nietabschnitt eine hexagonaler Abschnitt vor, der in der Praxis die Bauhöhe des Befestigungselements und die Tiefe der bei der Anbildung des Befestigungselements am Blech ausgebildeten Vertiefung des Blechteils erhöht und vor allem zu einer erheblichen Verdünnung der Wanddicke des Blechteils im Bereich des Nietbördels führt, wodurch die Gefahr der Rissbildung aufgrund des hohen Grades der Verdünnung und der Blechverformung schwer zu vermeiden ist.

Bei dem SBF Bolzen dagegen wird eine gerundete Vertiefung im Blechteil erzeugt und dies führt zu einer relativ steifen Anbindung des Bolzenelementes am Blechteil.

Aufgabe der vorliegenden Erfindung ist es, ein Funktionselement vorzusehen, das eine besonders steife Anbindung am Blechteil sicherstellt, so daß nicht nur Zug- und Kompressionskräfte über das Element am Blechteil übertragen werden können, sondern auch Quer- und Scherkräfte, wobei die Anbindung auch bei wechselnder Beanspruchung eine lange Lebensdauer aufweisen soll und nicht zu der Ausbildung von Ermüdungsrissen neigt. Weiterhin will die Erfindung ein Zusammenbauteil bestehend aus dem Funktionselement und einem Blechteil schaffen, das entsprechende Eigenschaften aufweist und ein Verfahren zur Anbringung des Funktionselements zur Verfügung stellen, das eine qualitativ hochwertige Anbringung des Funktionselements am Blechteil sicherstellt, ohne besonders aufwendig in der Realisierung zu sein.

In dieser Anmeldung hat die Bezeichnung "Funktionselement" seine normale Bedeutung, die Beispiele für solche Funktionselemente sind Befestigungselemente wie Mutterelemente oder Bolzenelemente, die die Anbringung eines weiteren Bauteils an einem Blechteil ermöglichen. Die Bezeichnung umfaßt aber auch alle Arten von Hohlelementen, die beispielsweise zur Aufnahme von eingesteckten Teilen oder als drehbare Lagerung für eine Welle dienen, wie auch alle Elemente, die mit einem Schaftteil versehen sind, beispielsweise zur Aufnahme von einem Klip oder zur drehbaren Lagerung eines hohlen Teiles.

Zur Lösung der Aufgabe wird erfindungsgemäß ein Funktionselement der eingangs genannten Art vorgesehen, daß sich dadurch auszeichnet, daß der Übergang vom Ringflansch in den Nietabschnitt durch eine zumindest im wesentlichen konusförmige Fläche gebildet ist, die eine Anlagefläche für einen entsprechenden konusförmigen Bereich eines Blechteils bildet, der bei Anbringung des Funktionselements an ein Blechteil zwischen der dem Nietabschnitt zugewandten Seite des Ringflansches und einem aus dem Nietabschnitt gebildeten Ringwulst eingeklemmt ist und dass die konusförmige Fläche sich von einer zur Auflagefläche des Funktionselements gehörenden ringförmigen Unterseite des Ringflansches in Richtung des Nietabschnitts bis zum Nietabschnitt oder bis zur Grenze eines zwischen der konusförmigen Fläche und dem Nietabschnitt vorgesehenen Halsteils erstreckt.

Ein entsprechendes Zusammenbauteil zeichnet sich dadurch aus, dass der Übergang vom Ringflansch in den Nietabschnitt durch eine zumindest im wesentlichen konusförmige Fläche gebildet ist, die eine Anlagefläche für das Blechteil bildet, dass die konusförmige Fläche sich von einer zur Auflagefläche des Funktionselements gehörenden ringförmigen Unterseite des Ringflansches in Richtung des Nietabschnitts bis zum Nietabschnitt oder bis zur Grenze eines zwischen der konusförmigen Fläche und dem Nietabschnitt vorgesehenen Halsteils erstreckt, dass das Blechteil einen konusförmigen Bereich aufweist, der an der konusförmigen Anlagefläche des Funktionselements anliegt, wobei der konusförmige Bereich des Blechteils zwischen der dem Nietabschnitt zugewandten Seite des Ringflansches und einem aus dem Nietabschnitt gebildeten Ringwulst eingeklemmt ist.

Diese Ausführung des Funktionselements bzw. des mit dem Funktionselement gebildeten Zusammenbauteils führt daher zu einer Ausbildung wonach der konusförmige Bereich des Blechteils zwischen der dem Nietabschnitt zugewandten Seite des Ringflansches und einem aus dem Nietabschnitt gebildeten Ringwulst geklemmt ist. Diese Konstruktion schafft eine besonders steife und feste Anbringung des Funktionselements am Blechteil und löst somit die oben angegebene Aufgabenstellung.

Besonders günstig ist es, wenn der konusförmige Bereich des Blechteils außerdem an der konusförmigen Anlagefläche des Funktionselements anliegt, da diese Anlage und die klemmende Aufnahme des konusförmigen Bereiches des Blechteils zwischen dem Ringflansch und dem Ringwulst dazu führt, daß das Element das Blechteil sozusagen vollflächig abstützt, so daß relative Bewegungen zwischen dem Blechteil und dem Element weitestgehend ausgeschlossen sind. Auch dies erhöht die Steifigkeit der Verbindung und hilft die Ausbildung von Ermüdungsrissen zu vermeiden.

Besonders günstig ist es, wenn Verdrehsicherungsmerkmale im Bereich der konusförmigen Fläche vorgesehen sind, da das Blechmaterial im Eingriff mit diesen Verdrehsicherungsmerkmalen gebracht werden kann, wodurch die Verdrehsicherung erreicht ist, ohne die Steifigkeit der Verbindung herabzusetzen. Außerdem sind im Bereich der Verdrehsicherungsmerkmale keine Ermündungsrisse des Blechteils zu befürchten, da das Blechmaterial, das klemmend zwischen der Auflagefläche des Funktionselements und dem Ringwulst aufgenommen ist, unter einem kompressiven Druck steht und daher gegen Ermüdungsrisse besonders geschützt ist. Auch bei wechselnden Belastungen reicht die kompressive Spannung im Blechteil aus, um die Ausbildung von Ermüdungsrissen, zu unterbinden. Die Verdrehsicherungsmerkmale können beispielsweise mit Vorteil die Form von Nasen und/oder Vertiefungen aufweisen.

Die axiale Länge der konusförmigen Fläche soll vorzugsweise mindestens in etwa der Blechdicke entsprechen. Eine Abmessung dieser Art stellt sicher, daß der konusförmige Bereich ausreichend lang ist, um die erwünschte Steifigkeit zu erzielen.

Der eingeschlossene Konuswinkel der konusförmigen Fläche liegt vorzugsweise im Bereich zwischen 80° und 120° und beträgt insbesondere 90°.

Besonders günstig ist es, wenn die konusförmige Fläche über einen zylindrischen Halsteil in den Nietabschnitt übergeht. Dieser Halsteil wird bei der Umformung des Materials des Funktionselements im Bereich des Nietabschnittes im wesentlichen nicht verformt und bildet einen Teil der klemmenden Aufnahme für das Blechmaterial im Bereich des Randes des in diesem vorgesehenen Loches. Der Halsteil kann mit Vorteil eine axiale Länge aufweisen, welche in etwa der Blechdicke entspricht und vorzugsweise etwas größer als diese ist.

Die axiale Dicke des Ringflansches kann kleiner ausgeführt werden als die Dicke des Blechteils, an dem das Element zu befestigen ist. Dies ist z.B. bei relativ dicken Blechteilen günstig, da der Ringflansch bei Anbringung an das Blechteil so in das Blechmaterial gedrückt werden kann, daß die dem Blechteil abgewandte Seite des Ringflansches mit der Ebene des Blechteils bündig ist oder leicht gegenüber dieser zurückversetzt ist.

Die Möglichkeit besteht aber auch, die axiale Dicke des Ringflansches deutlich größer als die Dicke des Blechteils zu machen, an dem das Element zu befestigen ist. In diesem Falle steht die dem Blechteil abgewandte Seite des Ringflansches deutlich vor der entsprechenden Seite des Blechteils vor und kann beispielsweise zur Realisierung einer Abstandsfunktion ausgenützt werden. In beiden Fällen kann der Ringflansch mit einem relativ großen Durchmesser ausgestattet werden, so daß insgesamt eine große Auflagefläche zwischen dem Funktionselement und dem Blechteil gegeben ist, wodurch eine günstige Flächenpressung erreicht und die Übertragung von Kräften über das Funktionselement in das Blechteil begünstigt werden kann. Besonders bevorzugte Ausführungsformen des Funktionselements sowie des Zusammenbauteils sind den Unteransprüchen zu entnehmen.

Eine besonders bevorzugte Ausführungsform des Verfahrens zur Anbringung des Funktionselements an ein Zusammenbauteil ist dem Anspruch 42 zu entnehmen, wobei weitere Varianten des Verfahrens in den weiteren Ansprüchen 43 bis 47 zu finden sind. Alternativ hierzu kann die Anbringung mit einem Verfahren erfolgen, das an sich im wesentlichen aus dem deutschen Patent 3447006 bekannt ist, wobei die Form der Matrize der besonderen Form des Blechteils bzw. Funktionselements anzupassen ist.

Die Erfindung wird nachfolgend näher erläutert, anhand von Ausführungsbeispielen unter Bezugnahme auf der Zeichnungen, welche zeigen:
- Fig. 1: ein teilweise in axialer Richtung geschnittenes Funktionselement in Form eines Mutterelements,
- Fig. 2: eine schematische Darstellung eines Blechteils, das zur Aufnahme des Funktionselements der Fig. 1 vorbereitet ist,
- Fig. 3: ein Zusammenbauteil, das aus dem Funktionselement der Fig. 1 und dem Blechteil der Fig. 2 gebildet ist,
- Fig. 4: eine Seitenansicht eines teilweise in Längsrichtung geschnittenes Funktionselements in Form eines Bolzenelements,
- Fig. 5: eine Stirnansicht des Bolzenelements der Fig. 4 entsprechend der Pfeilrichtung V der Fig. 4,
- Fig. 6: eine perspektivische Darstellung des Bolzenelements der Fig. 4 und 5,
- Fig. 7: eine teilweise geschnittene Darstellung eines Zusammenbauteils, das aus dem Bolzenelement der Fig. 4 bis 6 und einem Blechteil entsprechend der Fig. 2 gebildet ist,
- Fig. 8: eine Ansicht eines weiteren Funktionselements von der Unterseite gesehen, das in diesem Beispiel sowie in den nachfolgenden Fig. 9-11 keinen Ringflansch aufweist, jedoch mit einem Ringflansch, wie bei 34 in Fig. 1 gezeigt, ausgestattet werden kann, wodurch es zu einem erfindungsgemäßen Funktionselement umfunktioniert wird.
- Fig. 9: eine Seitenansicht des Funktionselements der Fig. 8, wobei die linke Hälfte der Darstellung in axialer Richtung geschnitten ist und das Element oberhalb eines Blechteils gezeigt ist, dass vom Element durchstanzt wird,
- Fig. 10: die Zusammenbausituation nach Anbringung des Funktionselements der Fig. 9 an das dort gezeigte Blechteil und
- Fig. 11: eine perspektivische Darstellung des Funktionselements der Fig. 8.

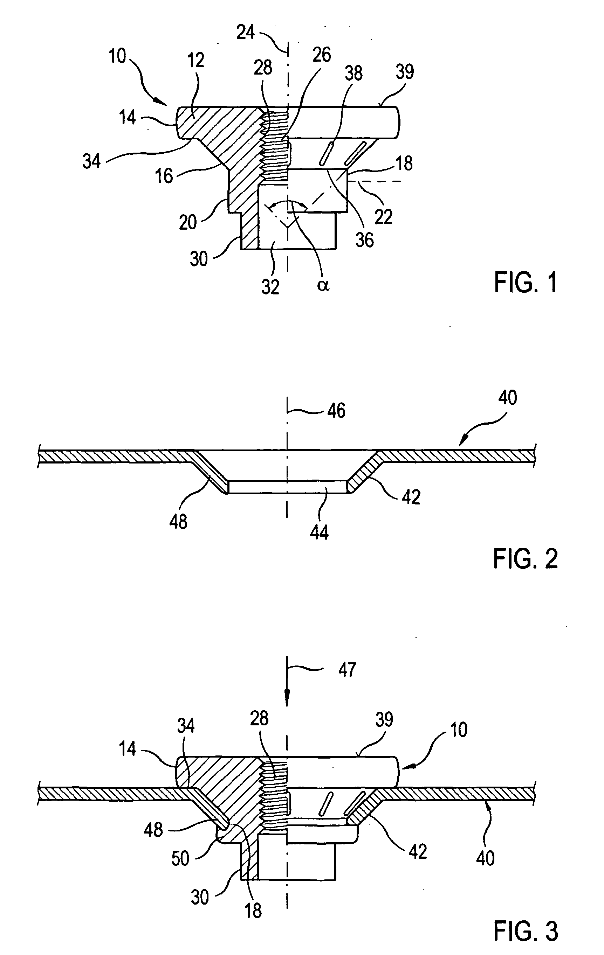

Die Fig. 1 zeigt ein Funktionselement 10 mit einem einstückigem Körperteil 12, das einen Ringflansch 14 aufweist, der über eine konusförmige Fläche 16 und einen Halsteil 18 in einen Nietabschnitt 20 übergeht. Die Grenze zwischen dem Halsteil 18 und dem Nietabschnitt 20 liegt bei 22. Der Körper 16 des Funktionselements 10 weist außerdem eine konzentrisch zur Längsachse 24 angeordnete Bohrung 26 mit einem Gewindezylinder 28 auf. Am unteren Ende des Nietabschnitts 20 in Fig. 1 geht dieser in eine zylindrische Fortsetzung 30 über, die als zum Nietabschnitt 20 gehörig gedacht werden kann. Die Bohrung 28 des Mutterelementes 10 weist im Bereich der zylindrischen Fortsetzung 30 einen Bereich 42 auf mit einem Durchmesser, der geringfügig größer ist als der Grunddurchmesser des Gewindezylinders 28.

Die konusförmige Fläche 16 erstreckt sich konkret zwischen einer zur Auflagefläche des Funktionselements gehörenden ringförmigen Unterseite 34 des Ringflansches 14 bis zu der Grenze 36 zum Halsteil 18 und weist einen Konuswinkel α von in diesem Beispiel 90° auf. Gleichmäßig verteilt um die konusförmige Fläche herum befinden sich Verdrehsicherungsmerkmale 38, die hier die Form von Nasen aufweisen, die sich jeweils in axiale Ebenen des Elementes erstrecken. Es sind hier acht solche Verdrehsicherungsnasen 38 vorgesehen, es könnten aber auch mehr oder weniger sein. Die Verdrehsicherungsnasen könnten auch die Form von Vertiefungen haben.

Die Fig. 2 zeigt ein Blechteil 40, das zur Aufnahme des Funktionselements 10 der Fig. 1 vorbereitet ist. Konkret weist das Blechteil 40 eine konusförmige Vertiefung 42 mit einem Loch 44 im Bodenbereich der konusförmigen Vertiefung auf. Der Konuswinkel des konusförmigen Bereiches 42 des Blechteils 40 entspricht dem Konuswinkel α der konusförmigen Fläche 16 des Funktionselements 10. Das Loch 44 weist einen Durchmesser auf, der dem Durchmesser des Halsteils 18 des Funktionselements 10 der Fig. 1 entspricht, wobei das Loch 44 auch einen etwas größeren Durchmesser aufweisen kann, beispielsweise im Bereich von 0,2 mm größer, um eine leichte Einführung des Funktionselements in das Loch zu ermöglichen. Es wäre auch denkbar, das Loch 44 geringfügig kleiner zu machen als den Durchmesser des Halsteils 18, wodurch durch Einführung des Halsteils 18 durch das Loch 44 dieses leicht aufgeweitet wird. Die konusförmige Form der Vertiefung 42 erleichtert auf jeden Fall die Ausrichtung des Funktionselements 10 mit dem Blechteil bei Einführung des Funktionselements. Die Achse 46 des Loches 44 flüchtet dabei mit der Längsachse 24 des Funktionselements 10.

Die Blechvorbereitung erfolgt üblicherweise in einer Stanzpresse oder in einer Station eines Folgeverbundwerkzeuges. In einer weiteren Presse (oder in der gleichen Presse) bzw. in einer weiteren Station eines Folgeverbundwerkzeuges wird das Funktionselement 10 dann unter Anwendung eines Setzkopfes in das Blechteil 40 eingebracht und an diesem angebracht, wobei das sich ergebende Zusammenbauteil in Fig. 3 dargestellt ist und nachfolgend näher erläutert wird. Es soll kurz zum Ausdruck gebracht werden, daß die Anbringung von Funktionselementen an Blechteilen in Pressen und in Folgeverbundwerkzeugen oder unter Anwendung von Robotern oder besonderen Gestelleinrichtungen an sich gut bekannt ist und hier nicht im Detail erläutert wird.

Die Zusammenbausituation gemäß Fig. 3 läßt erkennen, daß ein Ringwulst 50 aus dem Nietabschnitt 20 des Funktionselementes durch Verschiebung von Material des Nietabschnitts in Richtung auf den Ringflansch 14 zu gebildet ist. Dieser Ringwulst 50 bildet zusammen mit dem Halsteil 18, der bei der Verschiebung des Materials des Nietabschnitts zur Bildung des Ringwulstes 50 nur leicht verformt wird, eine klemmende Aufnahme für den Randbereich 48 des Loches 44 des Blechteils 40 und führt im übrigen dazu, daß das Blechmaterial im konusförmigen Bereich 42 unter einem kompressiven Druck im Bereich zwischen der ringförmigen Auflagefläche 34 des Funktionselements und der durch den Ringwulst 50 und dem Halsteil 18 gebildeten klemmenden Aufnahme für den Randbereich 48 des Loches des Blechteils. Obwohl hier nicht gezeigt, erfolgt hier die Verschiebung des Materials des Nietabschnitts in Richtung auf den Ringflansch 14 zu in einer Matrize, die eine konusförmige Vertiefung aufweist, die in Anlage gegen die Außenseite des konusförmigen Bereiches 42 des Blechteils gelangt, so daß das Blechmaterial gleichzeitig radial nach innen gedrückt wird, wodurch es zu einem formschlüssigen Eingriff zwischen dem Blechmaterial im konusförmigen Bereich 42 und den Verdrehsicherungsmerkmalen 38 kommt.

Bei der Verschiebung des Materials aus dem Bereich des Nietabschnitts auf den Ringflansch zu, wird von oben in Pfeilrichtung 47 auf die Stirnseite 39 des Funktionselements 10 gedrückt. Da relativ viel Material im Körperteil 12 des Funktionselements zwischen der Stirnseite 39 und dem Nietabschnitt vorhanden ist, wird dieser Bereich des Funktionselements nicht verformt, so daß eine Verformung des Gewindezylinders 28 nicht zu befürchten ist. Auch die zylindrische Fortsetzung 30 des Nietabschnitts wird bei der Anbringung des Funktionselements nicht verformt, sondern lediglich in eine Bohrung der (nicht gezeigten) Matrize geführt.

Das Zusammenbauteil gemäß Fig. 3 hat unter anderem den Vorteil, daß ein weiteres Bauteil auf der einen oder anderen Seite angebracht werden kann. Beispielsweise kann ein Bauteil auf der Stirnseite 39 befestigt werden, in diesem Fall mittels eines Bolzens, der von oben kommend in Fig. 3 in den Gewindezylinder 28 eingeschraubt wird. Durch die konusförmige Ausbildung des Bereiches 42 des Blechteils und die Ausbildung des Ringwulstes 50 ist die Anbringung des Funktionselements am Blechteil so fest bzw. steif, daß die Anbringung eines Bauteils an diese Stirnseite 39 ohne weiteres zulässig ist. Dabei kann die Höhe des Ringflansches 14, d.h. die axiale Dicke des Ringflansches 14 gewählt werden, um eine Abstandsfunktion zwischen dem weiteren Bauteil und dem Blechteil 40 zu gewährleisten.

Es besteht aber auch die Möglichkeit ein Bauteil auf der unteren Seite des Blechteils 40 in Fig. 3 anzubringen. In diesem Falle wäre der Bolzen von unten in den Gewindezylinder 28 einzuführen. Das Bauteil könnte sich auf der Unterseite des Blechteils gegenüber dem Ringflansch 14 abstützen oder an der Unterseite des Ringwulstes 50 oder bei geeigneter Dimensionierung der zylindrischen Fortsetzung 30 an der freien Stirnseite dieser Fortsetzung. Auch könnte die zylindrische Fortsetzung 30 als Lagefläche für ein drehbares Teil dienen, das ebenfalls mit einem Bolzen gesichert wird, der von unten kommend in den Gewindezylinder 28 eingeführt wird.

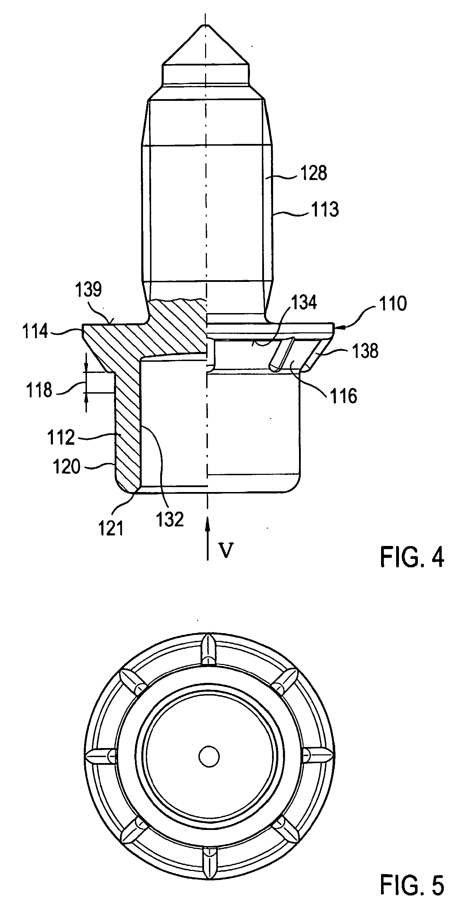

Die Fig. 4 bis 7 zeigen ein weiteres Beispiel eines erfindungsgemäßen Funktionselements hier in Form eines Bolzenelements.

Für die nachfolgende Beschreibung werden für Teile, die die gleiche Form oder Funktion aufweisen wie bei dem Mutterelement gemäß Fig. 1 bis 3 die gleichen Bezugszeichen verwendet, jedoch mit der Grundzahl 100 erhöht. Es kann davon ausgegangen werden, daß die bisherige Beschreibung auch für die entsprechend gekennzeichneten Teile der Ausführungsform gemäß Fig. 4 bis 7 gilt, es sei denn, etwas Gegenteiliges wird gesagt.

Das Bolzenelement 110 weist einen Kopfteil 112 auf, der zumindest im wesentlichen dem Körperteil 12 des Mutterelementes der Fig. 1 entspricht und das Bolzenelement hat außerdem einen Schaftteil 113, der sich von der Oberseite 139 des Ringflansches 114 weg erstreckt. Der Schaftteil 113 trägt einen Gewindezylinder 128.

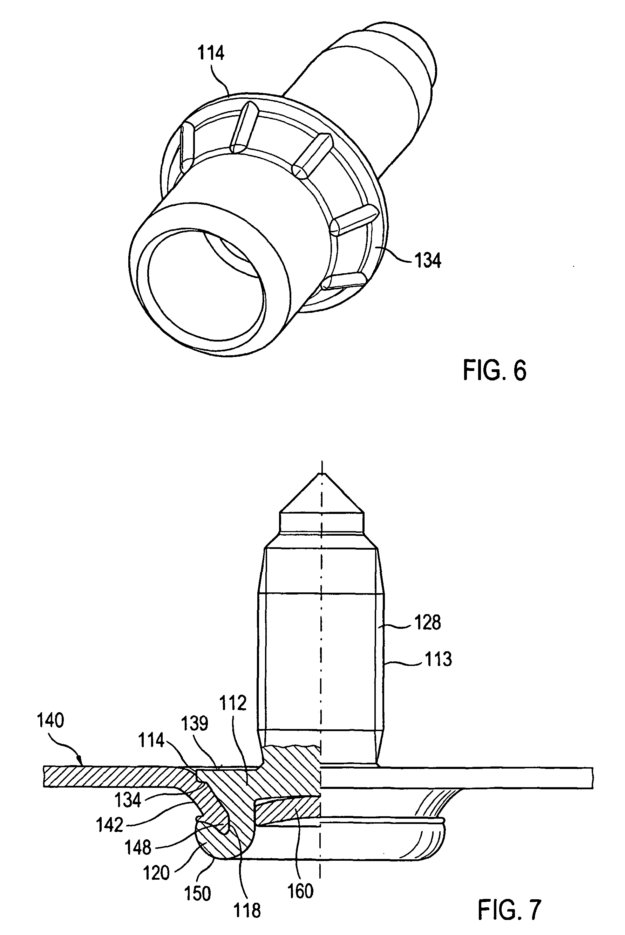

Der Ringflansch 114 geht in diesem Beispiel über eine ringförmige Auflagefläche 134 in eine konusförmige Anlagefläche 116 über, die unmittelbar in einen Nietabschnitt 120 übergeht, der hier mit Stanz- und Nietmerkmalen an seinem unteren Ende 121 ausgestattet ist, die im Prinzip den Stanz- und Nietmerkmale bei einem herkömmlichen SBF Bolzen identisch sind. D.h., man kann sich das Bolzenelement gemäß Fig. 4 bis 7 so vorstellen, daß jetzt kein Halsteil vorgesehen ist, was grundsätzlich auch bei der Ausbildung des Funktionselements gemäß Fig. 1 bis 3 möglich ist. Andererseits wird der obere Bereich 118 des Stanz- und Nietabschnitts 120 hier zumindest im wesentlichen nicht verformt, wie aus Fig. 7 hervorgeht, so daß dieser Bereich ggf. als Halsteil bezeichnet werden könnte.

Ähnlich wie bei der Ausführungsform gemäß Fig. 1 bis 3 sind hier Verdrehsicherungsmerkmale 138 vorgesehen, die hier die Form von Nasen aufweisen, wobei sich, im Unterschied zu der Ausbildung des Mutterelementes gemäß Fig. 1 bis 3, die Nasen 138 über die gesamte axiale Länge der konusförmigen Fläche 116 erstrecken und in der Unterseite 134 des Ringflansches 114 sowie im Halsbereich 118 auslaufen. Eine entsprechende Ausbildung der Verdrehsicherungsnasen 38 bei der Ausführungsform gemäß Fig. 1 bis 3 wäre auch möglich. Auch wäre es möglich, die Verdrehsicherungsnasen 138 gemäß Fig. 4 bis 7 mit Verdrehsicherungsvertiefungen zu ersetzen, die dann entsprechend auszulegen wären wie bei dem Ausführungsbeispiel wie bei Fig. 1 bis 3. Man merkt in diesem Beispiel, daß die axiale Dicke des Ringflansches 114 hier deutlich geringer ausgebildet ist als bei der Ausführungsform gemäß Fig. 1 bis 3 und daß nach Anbringung des Bolzenelements am Blechteil 140 gemäß Fig. 7 die obere Stirnseite 139 des Kopfteils 112 des Bolzenelementes leicht zurückversetzt gegenüber der Ebene der Oberseite des Blechteils 140 in der Darstellung gemäß Fig. 7 zu liegen kommt. Man merkt auch aus der Fig. 7, daß die axiale Dicke des Ringflansches 114 deutlich kleiner ist als die dicker des Blechteils 140. Dies ist aber keinesfalls zwingend erforderlich, sondern der Ringflansch 114 bei dem Ausführungsbeispiel gemäß Fig. 7 kann dicker ausgeführt werden als die Dicke des Blechteils 140 und das Bolzenelement kann so am Blechteil 140 angebracht werden, daß die Ringfläche 134 in etwa in der Ebene der Oberseite des Blechteils 140 zu liegen kommt, so daß die Stirnseite 139 des Kopfteils 112 deutlich oberhalb des Blechteils 140 angeordnet ist und auch hier eine Abstandsfunktion realisiert. Auch bestünde die Möglichkeit, den Ringflansch 14 der Ausführungsform gemäß Fig. 1 bis 3 so zu realisieren, wie in Fig. 7 gezeigt.

Der Ringwulst 150 gemäß Fig. 7 ist auch anders ausgeführt als der Ringwulst 50 des Funktionselements gemäß Fig. 1 bis 3. Da das Bolzenelement der Fig. 4 bis 7 selbsstanzend in das Blechteil eingebracht wird, unter Anwendung des Verfahrens gemäß dem deutschen Patent 3447006, wird der Nietabschnitt 120 nach dem Durchstanzen des Blechteils 140 mittels einer entsprechenden Umformfläche der verwendeten Matrize so umgebördelt, daß er die gerundete Form 150 annimmt, die in Fig. 7 gezeigt ist. Dabei wird auch das Blechteil so verformt, wie ebenfalls aus Fig. 7 ersichtlich ist. Beim Durchstanzen des Blechteils entsteht ein Stanzbutzen 160, der, wie im oben genannten deutschen Patent beschrieben, innerhalb der zylindrischen Ausnehmung 132 im Nietabschnitt 120 festgeklemmt wird, wodurch einerseits die Problematik der Entfernung des Stanzbutzens 160 entfällt und andererseits eine erhöhte Steifigkeit im Bereich des Kopfteils 112 erreicht wird. Trotz dieser unterschiedlichen Ausbildung des Ringwulstes 150 wird auch hier das Blechmaterial 148 aus dem Randbereich, der durchstanzten Öffnung klemmend im umgebördelten Nietabschnitt 120 aufgenommen und es entsteht auch hier eine kompressive Spannung im konusförmigen Bereich 142 zwischen der Auflagefläche 134 des Ringflansches 114 und der vom Nietabschnitt 120 gegebenenfalls gemeinsam mit dem "Halsteil" 118 gebildeten klemmenden Aufnahme für den Randbereich 148 des Stanzloches.

Obwohl die Ausbildung des Nietabschnittes 120 des Bolzenelementes gemäß Fig. 1 bis 7 entsprechend dem Nietabschnitt eines herkömmlichen SBF Bolzens ausgeführt wurde, ist dies nicht zwingend erforderlich. Man könnte z.B. die Ausbildung dieses Bereiches entsprechend der Ausbildung des Nietabschnitts 20 des Funktionselementes gemäß Fig. 1 bis 3 ausbilden und das Bolzenelement gemäß Fig. 1 bis 4 mit dem gleichen Verfahren am Blechteil 40 anbringen, das im Zusammenhang mit Fig. 1 bis 3 beschrieben wurde. Ebenfalls bestünde die Möglichkeit, das Funktionselement gemäß Fig. 1 bis 3 mit einem zylindrischen Nietabschnitt entsprechend dem Nietabschnitt 120 des Bolzenelements gemäß Fig. 1 bis 4 zu versehen und das Mutterelement entweder selbststanzend oder unter Anwendung eines an sich bekannten vorlaufenden Lochstempels in das Blechteil anzubringen.

Bei der Ausführungsform gemäß Fig. 1 bis 7 wird auch hier eine Situation erreicht, wo das Blechmaterial im konusförmigen Bereich 142 unter Kompressionsspannung gesetzt wird, so daß einerseits die Ausbildung von Ermüdungsrissen nicht zu befürchten ist, andererseits eine sehr steife hochwertige Anbindung des Funktionselements am Blechteil sichergestellt ist.

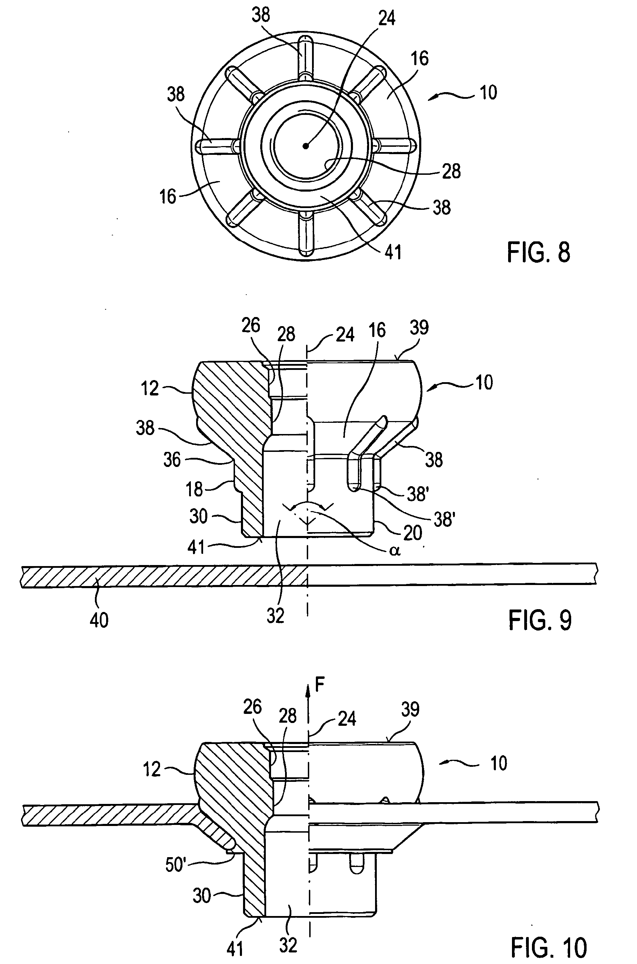

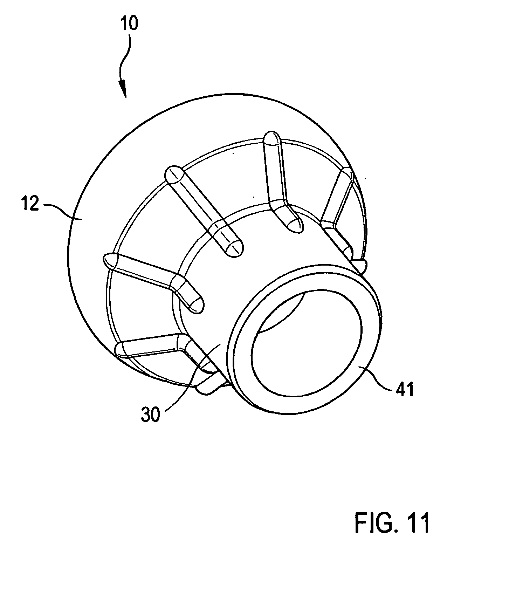

Die Figuren 8 bis 11 zeigen eine weitere Ausführungsform eines erfindungsgemäßen Funktionselements sowie die Zusammenbausituation mit dem Blechteil und haben eine starke Ähnlichkeit mit der Ausführung gemäß Fig. 1 bis 3. Aus diesem Grunde werden in den Figuren 8 bis 11 die gleichen Bezugszeichen verwendet wie bei der Ausführungsform gemäß Fig. 1 bis 3 und die Beschreibung der Ausführungsform gemäß Fig. 1 bis 3 gilt genauso für die Ausführungsform gemäß Fig. 8 bis 11, es sei denn, es wird etwas gegenteiliges gesagt. Mit anderen Worten gilt die Beschreibung der Figuren 1 bis 3 im Zusammenhang mit den dort verwendeten Bezugszeichen genauso für die Ausführung gemäß Fig. 8 bis 11.

Als erster Unterschied ist ersichtlich, dass das Funktionselement 10 der Fig. 8 bis 11 keinen Ringflansch aufweist, sondern die konusförmige Fläche 16 geht unmittelbar in den Kopfteil des Elements über. Es wäre dennoch denkbar, auch das Funktionselement der Fig. 8 bis 11 mit einem Ringflansch, wie bei 34 in Fig. 1 gezeigt, auszustatten.

Ferner ist aus den Figuren ersichtlich, dass die Verdrehsicherungsnasen 38 sich nicht nur über die volle Länge der konusförmigen Fläche 16 in axialen Ebenen erstrecken, sondern darüber hinaus sich ferner über die obere Hälfte (in Fig. 9) des zylindrischen Abschnitts 20 erstrecken, wo sie in gerundeten Enden 38' enden.

Bei dieser Ausführungsform ist der zylindrische Abschnitt 20 nicht mit einem Halsteil 18 versehen, obwohl dies möglich wäre, wenn das Funktionselement nicht wie hier selbst stanzend ausgeführt ist.

Bei der Ausführungsform gemäß Fig. 8 bis 11 wird das freie Stirnende 41 als Stanzabschnitt ausgebildet und ermöglicht es, das Blechteil 40 mit dem Element selbst durchzustanzen. Zu diesem Zweck wird das Blechteil oberhalb einer Matrize abgestützt mit einer mittleren Bohrung, die den zylindrischen Abschnitt 20 des Funktionselements 10 gleitend aufnimmt, wobei diese mittlere Passage über eine sich senkrecht zur Längsachse 24 erstreckende Ringschulter in eine konusförmige Vertiefung übergeht, die der Form der Außenfläche der konusförmigen Ausformung bzw. des konusförmigen Kragens des Blechteils entspricht. Diese konusförmige Vertiefung der Matrize geht dann in eine Stirnfläche der Matrize über, die wiederum senkrecht zur Längsachse 24 der Matrize steht.

Beim Durchstanzen des Blechteils wird das Blechteil durch das Stirnende 41 des Funktionselements zunächst konusförmig eingedellt und dann wird ein Stanzbutzen aus dem Bodenbereich der konusförmigen Eindellung herausgeschnitten und durch das freie Stirnende 41 des zylindrischen Abschnitts 20 des Funktionselements 10 durch die mittlere Passage der Matrize hindurchgedrückt bis in einen Freiraum, aus dem der Stanzbutzen entfernt werden kann.

Bei dieser weiteren Bewegung des Funktionselements in die Matrize hinein, dient die sich senkrecht zur Längsachse der Matrize erstreckende Ringschulter dazu, das Material der Verdrehsicherungsnasen 38 im Bereich des Zylinderabschnitts 20 so zu verformen, dass dieses Material zu radialen Vorsprüngen umgebildet wird an den Stellen der bisherigen Verdrehsicherungsnasen, wobei diese Materialvorsprünge, bei 50' in Fig. 10 angedeutet, über den Randbereich der Öffnung der konusförmigen Ausformung des Blechteils zu liegen kommen und vorzugsweise formschlüssig in diesen Randbereich eingreifen, so dass eine Verdrehsicherheit nicht nur im Bereich der konusförmigen Fläche des Funktionselements, sondern auch im Randbereich der Öffnung der konusförmigen Ausformung des Blechteils vorliegt.

Man merkt, dass die Verbindung zwischen dem Blechteil und dem Funktionselement, wie bei den weiteren Ausführungsformen, im wesentlichen nur im Bereich der konusförmigen Fläche des Funktionselements vorliegt.

Durch die radialen Vorsprünge 50' gelingt es, einen sehr hohen Auszieh- bzw. Auspresswiderstand zu erreichen, d.h. gegen Kräfte, die in Richtung F der Fig. 10 wirken; mit anderen Worten gegen Kräfte, die in axialer Richtung des Funktionselements vom zylindrischen Abschnitt 20 in Richtung des Körperteils 12 wirken. Auch hier tritt der Vorteil ein, dass, wenn solche Ausziehkräfte wirken, diese versuchen, die konusförmige Ausformung des Blechteils flacher zu drücken und das Blech hat gegen solche Kräfte einen sehr hohen Widerstand, u.a. da es sich am Element noch fester abstützt, so dass eine sehr stabile Verbindung vorliegt. Solche Kräfte können beispielsweise entstehen, wenn ein weiteres Bauteil auf der oberen Stirnseite 39 des Funktionselements 10 angeschraubt wird oder nach dem Anschrauben entsprechende Kräfte auf das Funktionselement ausübt. Es besteht bei dieser Ausführungsform aber auch die Möglichkeit, ein weiteres Bauteil auf der Unterseite des Blechteils 40 in Fig. 10 anzuschrauben, wobei der zylindrische Abschnitt 20 dann als Führung oder Zentrierung dienen kann. Das weitere anzuschraubende Bauteil muss dann üblicherweise eine Form haben, die ein sattes Anliegen am Blechteil 40 im Bereich der konusförmigen Ausformung sicherstellt. Ein solches weiteres Bauteil kann dann durch eine Schraube gesichert werden, die in Fig. 10 von unten kommend in den Gewindezylinder 28 eingeschraubt wird, wobei üblicherweise Maßnahmen getroffen werden, beispielsweise über ein Abstandstück, um sicherzustellen, dass das weitere Bauteil aufgrund der Anschraubkräfte satt am Blechteil 40 anliegt.

Der Zylinderabschnitt 20 könnte auch als Lagerzapfen für ein drehbar am Element 10 zu befestigendes Bauteil dienen, wobei ein solches drehbar gelagertes Bauteil dann durch die axial in das Gewinde 28 eingeschraubte Schraube in axialer Richtung gesichert werden kann.

Die gerundeten Enden 38' der Verdrehsicherungsnasen 38 stellen sicher, dass das Blechteil beim Einstanzen nicht unzulässig eingerissen wird, so dass Ermüdungsrisse im Blechteil an den Stellen der Verdrehsicherungsnasen bzw. an den Stellen der radialen Vorsprünge 50' nicht zu befürchten sind.

Obwohl das Funktionselement 10 der Fig. 8 bis 11 selbst stanzend eingebracht wird, kann das Element genauso in ein vorgelochtes Bauteil eingesetzt werden, falls dies erwünscht ist.

Ein Vorteil des erfindungsgemäßen Funktionselements liegt darin, dass mit einem Element einen breiten Bereich von Blechteildicken abgedeckt werden kann, so dass bspw. Das Funktionselement nach den Figuren 8 bis 11 mit Blechteilen mit Dicken im Bereich 0.6mm bis 4mm verwendet werden kann, wobei diese Dickenangaben nicht einschränkend zu verstehen sind und auch nicht auf die Ausführung gemäß Fig. 8 bis 11 beschränkt sind.

Die hier beschriebenen Funktionselemente können zum Beispiel aus allen Materialien hergestellt werden, die die Festigkeitsklasse 5.6 oder höher erreichen. Solche Metallwerkstoffe sind üblicherweise Kohlenstoffstähle mit 0,15 bis 0,55 % Kohlenstoffgehalt.

Bei allen Ausführungsformen können auch als Beispiel für den Werkstoff der Funktionselemente alle Materialien genannt werden, die im Rahmen der Kaltverformung die Festigungswerte der Klasse 8 gemäß Isostandard erreichen, beispielsweise eine 35B2-Legierung gemäß DIN 1654. Die so gebildeten Befestigungselemente eigenen sich u.a. für alle handelsüblichen Stahlwerkstoffe für ziehfähige Blechteile wie auch für Aluminium oder deren Legierungen. Auch können Aluminiumlegierungen, insbesondere solche mit hoher Festigkeit, für die Funktionselemente benutzt werden, z.B. AlMg5. Auch kommen Funktionselemente aus höherfesten Magnesiumlegierungen wie bspw. AM50 in Frage.

## Patentansprüche

1. Funktionselement (10; 110) zur Anbringung an ein Blechteil, wie bspw. ein Mutterelement (10) oder ein Bolzenelement (110) mit einem Körperteil (12;112) bzw. Kopfteil, der einen Ringflansch (14;114) aufweist und in einen zylindrischen Nietabschnitt (20;120) übergeht,
**dadurch gekennzeichnet,**
**dass** der Übergang vom Ringflansch (14;114) in den Nietabschnitt (20;120) durch eine zumindest im wesentlichen konusförmige Fläche (16;116) gebildet ist, die eine Anlagefläche für einen entsprechenden konusförmigen Bereich (42;142) eines Blechteils (40;140) bildet, der bei Anbringung des Funktionselements (10; 110) an ein Blechteil zwischen der dem Nietabschnitt (20;120) zugewandten Seite (34; 134) des Ringflansches (14; 114) und einem aus dem Nietabschnitt gebildeten Ringwulst (50;150) eingeklemmt ist und dass die konusförmige Fläche (16; 116) sich von einer zur Auflagefläche des Funktionselements gehörenden ringförmigen Unterseite (34; 134) des Ringflansches (14; 114) in Richtung des Nietabschnitts bis zum Nietabschnitt (20; 120) oder bis zur Grenze (36) eines zwischen der konusförmigen Fläche (16; 116) und dem Nietabschnitt vorgesehenen Halsteils (18) erstreckt.

2. Funktionselement nach Anspruch 1,
**dadurch gekennzeichnet,**
**dass** Verdrehsicherungsmerkmale (38; 138) im Bereich der konusförmigen Fläche (16; 116) vorgesehen sind.

3. Funktionselement nach einem der vorhergehenden Ansprüche,
**dadurch gekennzeichnet,**
**dass** die axiale Länge der konusförmigen Fläche (16; 116) mindestens in etwa der Blechdicke entspricht.

4. Funktionselement nach einem der vorhergehenden Ansprüche,
**dadurch gekennzeichnet,**
**dass** der eingeschlossene Konuswinkel (α) der konusförmigen Fläche vorzugsweise im Bereich zwischen 80° und 120° liegt und insbesondere etwa 90° beträgt.

5. Funktionselement nach einem der vorhergehenden Ansprüche,
**dadurch gekennzeichnet,**
**dass** die konusförmige Fläche (16; 116) über einen zylindrischen Halsteil (18; 118) in den Nietabschnitt (20; 120) übergeht.

6. Funktionselement nach Anspruch 5,
**dadurch gekennzeichnet,**
**dass** der Halsteil (18; 118) eine axiale Länge aufweist, welche mindestens in etwa der Blechdicke entspricht und vorzugsweise etwas größer als diese ist.

7. Funktionselement nach einem der vorhergehenden Ansprüche,
**dadurch gekennzeichnet,**
**dass** die axiale Dicke des Ringflansches (114) kleiner als die Dicke des Blechteils (140) ist an dem das Element (110) zu befestigen ist.

8. Funktionselement nach einem der vorhergehenden Ansprüche 1 bis 6,
**dadurch gekennzeichnet,**
**dass** die axiale Dicke des Ringflansches (14) deutlich größer ist als die Dicke des Blechteils (40) an dem das Element (10) zu befestigen ist.

9. Funktionselement nach einem der Ansprüche 2 bis 8,
**dadurch gekennzeichnet,**
**dass** die Verdrehsicherungsmerkmale (38; 138) die Form von Nasen aufweisen, die an der konusförmigen Fläche (16; 116) vorgesehen sind.

10. Funktionselement nach Anspruch 9,
**dadurch gekennzeichnet,**
**dass** sich die Verdrehsicherungsnasen (38; 138) in axialen Ebenen erstrecken.

11. Funktionselement nach Anspruch 9 oder 10,
**dadurch gekennzeichnet,**
**dass** sich die Verdrehsicherungsnasen (38; 138) vom Ringflansch (14; 114) bis zum Nietabschnitt (20; 120) bzw. bis zum Halsteil (18; 118) erstrecken.

12. Funktionselement nach einem der vorhergehenden Ansprüche 2 bis 8,
**dadurch gekennzeichnet,**
**dass** die Verdrehsicherungsmerkmale die Form von in der konusförmigen Fläche vorgesehenen Vertiefungen aufweisen.

13. Funktionselement nach Anspruch 12,
**dadurch gekennzeichnet,**
**dass** die die Verdrehsicherungsmerkmale bildenden Vertiefungen in axialen Ebenen des Funktionselementes angeordnet sind.

14. Funktionselement nach einem der vorhergehenden Ansprüche,
**dadurch gekennzeichnet,**
**dass** die der konusförmigen Fläche abgewandte Seite (39; 139) des Ringflansches (14; 114) eine Auflagefläche für ein Bauteil bildet, das mittels des Funktionselements (10;110) am Blechteil (40; 140) zu befestigen ist.

15. Funktionselement nach Anspruch 14,
**dadurch gekennzeichnet,**
**dass** die axiale Dicke des Ringflansches (14) gewählt ist, um eine Abstandsfunktion zwischen dem Blechteil (40) und einem am Blechteil mittels des Funktionselements (10) angebrachten Bauteil zu realisieren.

16. Funktionselement nach einem der vorhergehenden Ansprüche,
**dadurch gekennzeichnet,**
**dass** es sich um ein Mutterelement (10) handelt, bei dem das Körperteil (12) mit einer mittleren Bohrung (26) vorgesehen ist.

17. Funktionselement nach einem der vorhergehenden Ansprüche 1 bis 14,
**dadurch gekennzeichnet,**
**dass** es sich um ein Bolzenelement (110) handelt mit einem Schaftteil (113), das auf der dem Nietabschnitt (120) abgewandten Seite (134) des Ringflansches (114) angeordnet ist.

18. Funktionselement nach einem der vorhergehenden Ansprüche,
**dadurch gekennzeichnet,**
**dass** mehrere Verdrehsicherungsnasen an der konusförmigen Fläche des Funktionselements vorgesehen sind, sich vorzugsweise über die gesamte Länge der konusförmigen Fläche in axialer Ebene erstrecken und vorzugsweise gleichmäßig um die Längsachse des Funktionselements verteilt sind.

19. Funktionselement nach einem der vorhergehenden Ansprüche,
**dadurch gekennzeichnet,**
**dass** die Verdrehsicherungsnasen sich in axialer Richtung über mindestens einen Teil der axialen Länge des zylindrischen Abschnitts (20) erstrecken, dass das freie Stirnende des zylindrischen Abschnitts vorzugsweise als Stanzabschnitt ausgebildet ist und dass nach der Anbringung des Funktionselements an ein Blechteil das Material der sich entlang des zylindrischen Abschnitts (20) erstreckenden Verdrehsicherungsnasen in axialer Richtung verschoben wird, um an den Stellen der Verdrehsicherungsnasen radial nach außen erstreckende Materialvorsprünge zu bilden, die am Randbereich der Öffnung der konusförmigen Ausformung des Blechteils zu liegen kommen.

20. Zusammenbauteil bestehend aus einem Funktionselement, wie Mutterelement (10) oder Bolzenelement (110), insbesondere nach einem der Ansprüche 1 bis 19, mit einem Körperteil (12) bzw. Kopfteil (112), der einen Ringflansch (14; 114) aufweist und in einen zylindrischen Nietabschnitt (20; 120) übergeht, das an einem Blechteil (40; 140) befestigt ist,
**dadurch gekennzeichnet,**
**dass** der Übergang vom Ringflansch (14; 114) in den Nietabschnitt (20; 120) durch eine zumindest im wesentlichen konusförmige Fläche (16; 116) gebildet ist, die eine Anlagefläche für das Blechteil (40; 140) bildet, dass die konusförmige Fläche (16; 116) sich von einer zur Auflagefläche des Funktionselements gehörenden ringförmigen Unterseite (34; 134) des Ringflansches (14; 114) in Richtung des Nietabschnitts bis zum Nietabschnitt (20; 120) oder bis zur Grenze (36) eines zwischen der konusförmigen Fläche (16; 116) und dem Nietabschnitt vorgesehenen Halsteils (18) erstreckt, dass das Blechteil einen konusförmigen Bereich (42; 142) aufweist, der an der konusförmigen Anlagefläche des Funktionselements anliegt, wobei der konusförmige Bereich des Blechteils zwischen der dem Nietabschnitt (20; 120) zugewandten Seite (34; 134) des Ringflansches (14; 114) und einem aus dem Nietabschnitt gebildeten Ringwulst (50; 150) eingeklemmt ist.

21. Zusammenbauteil nach Anspruch 20,
**dadurch gekennzeichnet,**
**dass** Verdrehsicherungsmerkmale (38; 138) im Bereich der konusförmigen Fläche des Funktionselements vorgesehen sind und dass das Blechmaterial des Blechteils (40; 140) im konusförmigen Bereich (42; 142) formschlüssig mit den Verdrehsicherungsmerkmalen im Eingriff ist.

22. Zusammenbauteil nach Anspruch 20 oder 21,
**dadurch gekennzeichnet,**
**dass** die axiale Länge der konusförmigen Fläche (16; 116) mindestens in etwa der Blechdicke entspricht.

23. Zusammenbauteil nach einem der vorhergehenden Ansprüche 20 bis 22,
**dadurch gekennzeichnet,**
**dass** der eingeschlossene Konuswinkel (α) der konusförmigen Fläche (16; 116) im Bereich zwischen 80° und 120° liegt und insbesondere etwa 90° beträgt.

24. Zusammenbauteil nach einem der vorhergehenden Ansprüche 20 bis 23,
**dadurch gekennzeichnet,**
**dass** die konusförmige Fläche (16; 116) über einen zumindest im wesentlichen zylindrischen Halsteil (18; 118) in den Nietabschnitt (20; 120) übergeht.

25. Zusammenbauteil nach Anspruch 24,
**dadurch gekennzeichnet,**
**dass** der Halsteil (20; 120) eine axiale Länge aufweist, welche mindestens in etwa der Blechdicke entspricht und vorzugsweise etwas größer als diese ist.

26. Zusammenbauteil nach einem der vorhergehenden Ansprüche 20 bis 25,
**dadurch gekennzeichnet,**
**dass** die axiale Dicke des Ringflansches (114) kleiner als die Dicke des Blechteils (140) ist.

27. Zusammenbauteil nach einem der vorhergehenden Ansprüche 20 bis 25,
**dadurch gekennzeichnet,**
**dass** die axiale Dicke des Ringflansches (14) deutlich größer ist als die Dicke des Blechteils (40).

28. Zusammenbauteil nach einem der Ansprüche 20 bis 27,
**dadurch gekennzeichnet,**
**dass** die Verdrehsicherungsmerkmale (38; 138) die Form von Nasen aufweisen, die an der konusförmigen Fläche (16; 116) vorgesehen sind.

29. Zusammenbauteil nach Anspruch 28,
**dadurch gekennzeichnet,**
**dass** sich die Verdrehsicherungsnasen (38; 138) in axialen Ebenen erstrecken.

30. Zusammenbauteil nach Anspruch 28 oder 29,
**dadurch gekennzeichnet,**
**dass** sich die Verdrehsicherungsnasen (38; 138) vom Ringflansch (14; 114) bis zum Nietabschnitt (20; 120) bzw. bis zum Halsteil (18; 118) erstrecken.

31. Zusammenbauteil nach einem der vorhergehenden Ansprüche 20 bis 27,
**dadurch gekennzeichnet,**
**dass** die Verdrehsicherungsmerkmale die Form von in der konusförmigen Fläche vorgesehenen Vertiefungen aufweisen.

32. Zusammenbauteil nach Anspruch 31,
**dadurch gekennzeichnet,**
**dass** die die Verdrehsicherungsmerkmale bildenden Vertiefungen in axialen Ebenen des Funktionselementes angeordnet sind.

33. Zusammenbauteil nach einem der vorhergehenden Ansprüche 20 bis 32,
**dadurch gekennzeichnet,**
**dass** die der konusförmigen Fläche (16; 116) abgewandte Seite (39; 139) des Ringflansches eine Auflagefläche für ein Bauteil bildet, das mittels des Funktionselements (10; 110) am Blechteil (40; 140) zu befestigen ist.

34. Zusammenbauteil nach Anspruch 33,
**dadurch gekennzeichnet,**
**dass** die axiale Dicke des Ringflansches (14) gewählt ist, um eine Abstandsfunktion zwischen dem Blechteil (40) und einem am Blechteil mittels des Funktionselements (10) angebrachten Bauteil, zu realisieren.

35. Zusammenbauteil nach einem der vorhergehenden Ansprüche 20 bis 34,
**dadurch gekennzeichnet,**
**dass** es sich um ein Mutterelement (10) handelt, bei dem das Körperteil (12) mit einer mittleren Bohrung (26) vorgesehen ist.

36. Zusammenbauteil nach einem der Ansprüche 20 bis 35,
**dadurch gekennzeichnet,**
**dass** der Ringwulst (50) durch Verschiebung von Material des Nietabschnittes (20) gebildet ist.

37. Zusammenbauteil nach Anspruch 36,
**dadurch gekennzeichnet,**
**dass** der Ringwulst (50) zusammen mit dem Halsteil (18) des Funktionselements (10) eine klemmende Aufnahme für den Rand (48) der Öffnung (44) des konusförmigen Bereiches (42) des Blechteils (40) bildet, wodurch sich ein Teil des Ringwulstes (50) auf der dem Ringflansch (14) entgegengesetzten Seite des konusförmigen Bereiches (42) des Blechteils (40) befindet.

38. Zusammenbauteil nach Anspruch 36 oder 37,
**dadurch gekennzeichnet,**
**dass** ein zylindrischer Bereich (30) des Nietabschnittes (20) unverformt ist und vom Ringwulst (50) auf der dem Ringflansch entgegengesetzten Seite in axialer Richtung (24) des Funktionselements (10) weg erstreckt.

39. Zusammenbauteil nach einem der Ansprüche 20 bis 35,
**dadurch gekennzeichnet,**
**dass** der Nietabschnitt (120) um den Rand (148) der Öffnung (144) des konusförmigen Bereiches (142) des Blechteils (140) umgebördelt ist.

40. Zusammenbauteil nach einem der Ansprüche 20 bis 39,
**dadurch gekennzeichnet,**
**dass** der konusförmige Bereich des Funktionselements sich über zumindest im wesentlichen den ganzen Blechbereich erstreckt, der nach dem Vernieten des Funktionselements mit dem Blechteil in Berührung mit dem Element sich befindet.

41. Zusammenbauteil nach einem der vorhergehenden Ansprüche mit einem Funktionselement nach Anspruch 19,
**dadurch gekennzeichnet,**
**dass** Material, das aus den Verdrehsicherungsnasen am zylindrischen Abschnitt des Elements entstanden ist, an den Stellen der Verdrehsicherungsmerkmale am Randbereich der Öffnung der konusförmigen Ausformung des Blechteils anliegt und vorzugsweise formschlüssig in diese Stellungsweise eingreift, um einerseits eine zusätzliche Verdrehsicherung an dieser Stelle zu erreichen und andererseits das Element gegen Auszieh- oder Ausdrückkräfte im Blechteil zu sichern, die in der Richtung vom zylindrischen Abschnitt bis zum Körperteil bzw. Kopfteil des Funktionselements wirken.

42. Verfahren zur Anbringung eines Funktionselements nach einem der Ansprüche 1 bis 19 bzw. zur Herstellung eines Zusammenbauteils nach einem der Ansprüche 20 bis 41,
**dadurch gekennzeichnet,**
**dass** eine konusförmige Vertiefung (42) in einem Blechteil (40) angefertigt wird, dessen Konuswinkel (α) zumindest im wesentlichen dem Konuswinkel (α) der konusförmigen Fläche (16) des Funktionselements (10) entspricht, wobei ein Loch (44) im und konzentrisch zur konusförmigen Vertiefung (42) vorgesehen ist, dessen Durchmesser zumindest im wesentlichen dem Durchmesser des Nietabschnittes (20) des Funktionselements entspricht oder etwas größer als dieser ist, dass der Nietabschnitt (20) des Funktionselements (10) durch das Loch (44) der konusförmigen Vertiefung (42) des Blechteils hindurchgeführt wird, so dass der konusförmige Bereich der konusförmigen Vertiefung (42) in etwa in Anlage mit der konusförmigen Fläche (16) des Funktionselements und der Ringflansch (14) mit dem Blechteil (40) in Anlage gelangt, und dass ein Ringwulst (50) aus Material des Nietabschnittes (20) gebildet wird, der den konusförmigen Bereich des Blechteils zwischen dem Ringflansch (14) und sich selbst klemmend aufnimmt.

43. Verfahren nach Anspruch 42,
**dadurch gekennzeichnet,**
**dass** die Ausbildung des Ringwulstes (50) durch Verschiebung eines Bereiches des Nietabschnitts (20) des Funktionselements (10) erfolgt und dass das Blechmaterial des Blechteils (40) während dieser Verschiebung in eine Matrize abgestützt wird, die das Blechmaterial im konusförmigen Bereich in Eingriff mit Verdrehsicherungsmerkmalen des Funktionselements bringt.

44. Verfahren nach Anspruch 42,
**dadurch gekennzeichnet,**
**dass** der Ringwulst (150) durch Umbördelung des Nietabschnitts (120) gebildet wird und dass bei oder nach der Umbördelung das Blechmaterial in eine Matrize abgestützt wird, die das Blechmaterial im konusförmigen Bereich (140) in Eingriff mit Verdrehsicherungsmerkmalen des Funktionselements bringt.

45. Verfahren nach einem Anspruch 42,
**dadurch gekennzeichnet,**
**dass** zur Formung der konusförmigen Vertiefung im Blechteil das auf einer Matrize abgestützte Blechteil durch das freie Stirnende des zylindrischen Abschnitts (20) des Elements durchstanzt und zu der konusförmigen Vertiefung in einer entsprechend geformten Ausnehmung der Matrize geformt wird.

46. Verfahren nach Anspruch 45,
**dadurch gekennzeichnet,**
**dass** der Stanzbutzen, der beim Durchstanzen des Blechteils entsteht, durch den Zylinderabschnitt des Funktionselements in eine Passage der Matrize eingedrückt und über diese Passage entsorgt wird, d.h. dass das Funktionselement selbst einen Lochstempel bildet.

47. Verfahren nach einem der Ansprüche 44 bis 46,
**dadurch gekennzeichnet,**
**dass** anstelle der Ausbildung eines Ringwulstes aus dem Material des Nietabschnitts das Material von erhaben am Zylinderabschnitt des Funktionselements vorgesehenen Verdrehsicherungsnasen durch Verschiebung des Materials in axialer Richtung des Zylinderabschnitts auf den Körperteil des Funktionselements zu, die durch die verwendete Matrize bewirkt wird, zu radialen Vorsprüngen führt, die an den Stellen der Verdrehsicherungsnasen vorliegen und am Randbereich der Öffnung der konusförmigen Ausformung des Blechteils anliegen und vorzugsweise formschlüssig in diese eingreifen.

## Claims

1. A functional element (10; 110) for the attachment to a sheet metal part, such as for example a nut element (10) or a bolt element (110) having a body portion (12; 112) or head portion respectively, which has a ring flange (14; 114) and merges into a cylindrical rivet section (20; 120),
**characterized in that**
the transition from the ring flange (14; 114) into the rivet section (20; 120) is formed by an at least substantially conical surface (16; 116), which forms a contact surface for a corresponding conical region (42; 142) of a sheet metal part (40, 140) which, on attachment of the functional element (10; 110) to a sheet metal part, is trapped between the side (34; 134) of the ring flange (14, 114) facing the rivet section (20; 120) and a ring bead (50; 150) formed from the rivet section and **in that** the conical surface (16; 116) extends from a ring-like underside (34; 134) of the ring flange (14; 114) belonging to the contact surface of the functional element in the direction of the rivet section up to the rivet section (20; 120) or up to the boundary of a throat part (18) provided between the conical surface (16; 116) and the rivet section.

2. A functional element in accordance with claim 1,
**characterized in that**
features (38; 138) providing security against rotation are provided in the region of the conical surface (16; 116).

3. A functional element in accordance with one of the preceding claims,
**characterized in that**
the axial length of the conical surface (16; 116) corresponds at least substantially to the sheet metal thickness.

4. A functional element in accordance with any one of the preceding claims,
**characterized in that**
the included cone angle (α) of the conical surface preferably lies in the range between 80° and 120° and in particular amounts to approximately 90°.

5. A functional element in accordance with any one of the preceding claims,
**characterized in that**
the conical surface (16; 116) merges via a cylindrical throat part (18; 118) into the rivet section (20; 120).

6. A functional element in accordance with claim 5,
**characterized in that**
the throat part (18; 118) has an axial length which corresponds at least approximately to the sheet metal thickness and is preferably somewhat larger than this.

7. A functional element in accordance with any one of the preceding claims,
**characterized in that**
the axial thickness of the ring flange (114) is smaller than the thickness of the sheet metal part (140) to which the element (110) is to be secured.

8. A functional element in accordance with any one of the preceding claims 1 to 6,
**characterized in that**
the axial thickness of the ring flange (14) is significantly larger than the thickness of the sheet metal part (40) to which the element (10) is to be secured.

9. A functional element in accordance with any one of the claims 2 to 8,
**characterized in that**
the features (38; 138) providing security against rotation have the form of noses which are provided at the conical surface (16; 116).

10. A functional element in accordance with claim 9,
**characterized in that**
the noses (38; 138) providing security against rotation extend in axial planes.

11. A functional element in accordance with claim 9 or claim 10,
**characterized in that**
the noses (38; 138) providing security against rotation extend from the ring flange (14; 114) up to the rivet section (20; 120) or up to the throat portion (18; 118).

12. A functional element in accordance with any one of the preceding claims 2 to 8,
**characterized in that**
the features providing security against rotation have the form of recesses provided in the conical surface.

13. A functional element in accordance with claim 12,
**characterized in that**
the recesses which form the features providing security against rotation are arranged in axial planes of the functional element.

14. A functional element in accordance with any one of the preceding claims,
**characterized in that**
the side (39; 139) of the ring flange (14; 114) remote from the conical surface forms a support surface for a component which is to be secured by means of the functional element (10; 110) to the sheet metal component (40; 140).

15. A functional element in accordance with claim 14,
**characterized in that**
the axial thickness of the ring flange (14) is selected in order to realize a spacer function between the sheet metal part (40) and a component to be attached to the sheet metal part by means of the functional element (10).

16. A functional element in accordance with any one of the preceding claims,
**characterized in that**
it is a nut element (10) in which the body portion (12) is provided with a central bore (26).

17. A functional element in accordance with any one of the preceding claims 1 to 14,
**characterized in that**
it is a bolt element (110) having a shaft part (113) which is arranged at the side (134) of the ring flange (114) remote from the rivet section (120).

18. A functional element in accordance with any one of the preceding claims,
**characterized in that**
a plurality of noses providing security against rotation are provided at the conical surface of the functional element, preferably extend over the full length of the conical surface in an axial plane and are preferably uniformly distributed around the longitudinal axis of the functional element.

19. A functional element in accordance with any one of the preceding claims,
**characterized in that**
the noses providing security against rotation extend in the axial direction over at least a part of the axial length of the cylindrical portion (20); **in that** the free end face of the cylindrical portion is preferably formed as a piercing portion and **in that**, after the attachment of the functional element to a sheet metal part, the material of the noses providing security against rotation which extend along the cylindrical portion (20) is displaced in the axial direction in order to form radially outwardly extending material projections at the positions of the noses providing security against rotation, with the material projections coming to lie at the rim of the opening of the conical formation of the sheet metal part.

20. A component assembly comprising a functional element such as a nut element (10) or bolt element (110), in particular in accordance with one of the claims 1 to 19 having a body portion (12) or head portion (112) which has a ring flange (14; 114) and merges into a cylindrical rivet section (20; 120) which is secured to a sheet metal part (40; 140),
**characterized in that**
the transition from the ring flange (14; 114) into the rivet section (20; 120) is formed by an at least substantially conical surface (16; 116) which forms a contact surface for the sheet metal part (40; 140); **in that** the conical surface (16; 116) extends from a ring-like underside (34; 134) of the ring flange (14; 114) belonging to the contact surface of the functional element in the direction of the rivet section up to the rivet section (20; 120) or up to the boundary (36) of a throat part (18) provided between the conical surface (16; 116) and the rivet section; **in that** the sheet metal part has a conical region (42; 142) which contacts the conical contact surface of the functional element, with the conical region of the sheet metal part being clamped between the side (34; 134) of the ring flange (14; 114) facing the rivet section and a ring bead (50; 150) formed from the rivet section.

21. A component assembly in accordance with claim 20,
**characterized in that**
features (38; 138) providing security against rotation are provided in the region of the conical surface of the functional element and **in that** the sheet material of the sheet metal part (40; 140) is in form-locked engagement with the features providing security against rotation in the conical region (42; 142).

22. A component assembly in accordance with claim 20 or claim 21,
**characterized in that**
the axial length of the conical surface (16; 116) corresponds at least substantially to the sheet metal thickness.

23. A component assembly in accordance with any one of the preceding claims 20 to 22,
**characterized in that**
the included cone angle (α) of the conical surface (16; 116) lies in the range between 80° and 120° and in particular amounts to approximately 90°.

24. A component assembly in accordance with any one of the preceding claims 20 to 23,
**characterized in that**
the conical surface (16; 116) merges via an at least substantially cylindrical throat part (18; 118) into the rivet section (20; 120).

25. A component assembly in accordance with claim 24,
**characterized in that**
the neck part (20; 120) has an axial length which corresponds at least approximately to the sheet metal thickness and is preferably somewhat larger than this.

26. A component assembly in accordance with any one of the preceding claims 20 to 25,
**characterized in that**
the axial thickness of the ring flange (114) is smaller than the thickness of the sheet metal part (140).

27. A component assembly in accordance with any one of the preceding claims 20 to 25,
**characterized in that**
the axial thickness of the ring flange (14) is significantly larger than the thickness of the sheet metal part (40).

28. A component assembly in accordance with any one of the claims 20 to 27,
**characterized in that**
the features (38; 138) providing security against rotation have the form of noses which are provided at the conical surface (16; 116).

29. A component assembly in accordance with claim 28,
**characterized in that**
the noses (38; 138) providing security against rotation extend in axial planes.

30. A component assembly in accordance with claim 28 or claim 29,
**characterized in that**
the noses (38; 138) providing security against rotation extend from the ring flange (14; 114) up to the rivet section (20; 120) or up to the throat part (18; 118).

31. A component assembly in accordance with any one of the preceding claims 20 to 27,
**characterized in that**
the features providing security against rotation have the form of recesses provided in the conical surface.

32. A component assembly in accordance with claim 31,
**characterized in that**
the recesses forming the features providing security against rotation are arranged in axial planes of the functional element.

33. A component assembly in accordance with any one of the preceding claims 20 to 32,
**characterized in that**
the side (39; 139) of the ring flange remote from the conical surface (16; 116) forms a support surface for a component which is to be secured by means of the functional element (10; 110) to the sheet metal part (40; 140).

34. A component assembly in accordance with claim 33,
**characterized in that**
the axial thickness of the ring flange (14) is selected in order to realize a spacer function between the sheet metal part (40) and a component attached to the sheet metal part by means of the functional element (10).

35. A component assembly in accordance with any one of the preceding claims 20 to 34,
**characterized in that**
it is a nut element in which the body portion (12) is provided with a central bore (26).

36. A component assembly in accordance with any one of the claims 20 to 35,
**characterized in that**
the ring bead (50) is formed by a displacement of material of the rivet section (20).

37. A component assembly in accordance with claim 36,
**characterized in that**
the ring bead (50) together with the throat part (18) of the functional element (10) forms a clamping recess for the rim (48) of the opening (44) of the conical region (42) of the sheet metal part (40), whereby a part of the ring bead (50) is located on the opposite side of the conical region (42) of the sheet metal part from the ring flange (14).

38. A component assembly in accordance with claim 36 or 37,
**characterized in that**
a cylindrical region (30) of the rivet section (20) is not deformed and extends in the axial direction (24) of the functional element (10) away from the ring bead (50) at the side remote from the ring flange.

39. A component assembly in accordance with any one of the claims 20 to 35,
**characterized in that**
the rivet section (120) is turned over around the rim (148) of the opening (144) of the conical region (142) of the sheet metal part (140).

40. A component assembly in accordance with any one of the claims 20 to 39,
**characterized in that**
conical region of the functional element extends over at least substantially the whole region of the sheet metal which is in contact with the element after the riveting of the functional element to the sheet metal part.

41. A component assembly in accordance with any one of the preceding claims with a functional element in accordance with claim 19,
**characterized in that**
material which arisen from the noses providing security against rotation at the cylindrical section of the element contacts the edge region of the opening of the conical formation of the sheet metal part at the positions of the features providing security against rotation and preferably engages in form-locked manner into this formation locally in order, on the one hand, to achieve an additional security against rotation at this point, and, on the other hand, to secure the element against pull-out or push-out forces in the sheet metal part which act in the direction from the cylindrical section to the body portion or head portion of the functional element.

42. A method for the attachment of a functional element in accordance with one of the claims 1 to 19 or for the manufacture of a component assembly in accordance with one of the claims 20 to 41,
**characterized in that**
a conical recess (42) is manufactured in a sheet metal part (40), with the cone angle (α) of the conical recess corresponding at least substantially to the cone angle (α) of the conical surface (16) of the functional element (10), with a hole (44) being provided in and concentric to the conical recess (42), with the diameter of the hole corresponding at least substantially to the diameter of the rivet section (20) of the functional element or being somewhat larger than this; **in that** the rivet section (20) of the functional element (10) is passed through the hole (44) of the conical recess (42) of the sheet metal part so that the conical region of the conical recess (42) enters approximately into contact with the conical surface (16) of the functional element and the ring flange (14) enters into engagement with the sheet metal part (40) and **in that** a ring bead (50) is formed from material of the rivet section (20) which clampingly receives the conical region of the sheet metal part between itself and the ring flange (14).

43. A method in accordance with claim 42,
**characterized in that**
the formation of the ring bead (50) takes place by displacement of a region of the rivet section (20) of a functional element (10) and **in that** the sheet material of the sheet metal part (40) is supported during this displacement in a die which brings the sheet metal material in the conical region into engagement with features of the functional element providing security against rotation.

44. A method in accordance with claim 42,
**characterized in that**
the ring bead (150) is formed by turning over the rivet section (120) and **in that** during or after the turning over the sheet metal is supported in a die which brings the sheet material and the conical region (140) into engagement with features of the functional element providing security against rotation.

45. A method in accordance with claim 42,
**characterized in that**
for the formation of the conical recess in the sheet metal part the sheet metal part which is supported on a die is pierced by the free end of the cylindrical section (20) of the element and formed into the conical recess in a correspondingly shaped recess of the die.

46. A method in accordance with claim 45,
**characterized in that**
the piercing slug which arises during piercing of the sheet metal part is pressed by the cylinder section of the functional element into a passage of the die and is disposed off via this passage, i.e. **in that** the functional element itself forms a hole punch.

47. A method in accordance with any one of the claims 44 to 46,
**characterized in that**
instead of forming a ring bead from the material of the rivet section the material from raised noses providing security against rotation and provided in raised form on the cylinder section of the functional element leads, by displacement of the material in the axial direction of the cylinder section towards the body portion of the functional element, which is brought about by the die that is used, to radial projections which are present at the positions of the noses providing security against rotation, which contact the rim zone of the opening of the conical formation of the sheet metal part and which preferably engage in form-locked manner into this conical formation.

## Revendications

1. Elément fonctionnel (10 ; 110) destiné au montage sur une pièce en tôle, comme par exemple un élément formant écrou (10) ou un élément boulon (110) comportant une partie de corps (12 ; 112) ou une partie de tête, qui présente une bride annulaire (14 ; 114) et qui se transforme en une portion à riveter (20 ; 120) cylindrique,
**caractérisé en ce que**
la transition de la bride annulaire (14 ; 114) vers la portion à riveter (20 ; 120) est formée par une surface (16 ; 116) au moins sensiblement conique qui constitue une surface d'appui pour une zone conique correspondante (42 ; 142) d'une pièce en tôle (40 ; 140), qui, lors du montage de l'élément fonctionnel (10 ; 110) sur une pièce en tôle, est serrée entre le côté (34 ; 134) de la bride annulaire (14 ; 114) tourné vers la portion à riveter (20 ; 120) et un bourrelet annulaire (50 ; 150) constitué par la portion à riveter, et **en ce que** la surface conique (16 ; 116) s'étend depuis un côté inférieur annulaire (34 ; 134), appartenant à la surface d'appui de l'élément fonctionnel, de la bride annulaire (14 ; 114) en direction de la portion à riveter jusqu'à la portion à riveter (20 ; 120) ou jusqu'à la limite (36) d'une partie de col (18) prévue entre la surface conique (16 ; 116) et la portion à riveter.

2. Elément fonctionnel selon la revendication 1,
**caractérisé en ce que**
il est prévu des caractéristiques de blocage antirotation (38 ; 138) dans la zone de la surface conique (16; 116).

3. Elément fonctionnel selon l'une des revendications précédentes,
**caractérisé en ce que**
la longueur axiale de la surface conique (16 ; 116) correspond au moins approximativement à l'épaisseur de la tôle.

4. Elément fonctionnel selon l'une des revendications précédentes,
**caractérisé en ce que**
l'angle de cône enfermé (α) de la surface conique est de préférence dans la plage entre 80° et 120° et s'élève en particulier à environ 90°.

5. Elément fonctionnel selon l'une des revendications précédentes,
**caractérisé en ce que**
la surface conique (16 ; 116) se transforme en la portion à riveter (20 ; 120) via une partie de col cylindrique (18 ; 118).

6. Elément fonctionnel selon la revendication 5,
**caractérisé en ce que**
la partie de col (18 ; 118) présente une longueur axiale qui correspond au moins approximativement à l'épaisseur de tôle et est de préférence légèrement supérieure à cette dernière.

7. Elément fonctionnel selon l'une des revendications précédentes,
**caractérisé en ce que**
l'épaisseur axiale de la bride annulaire (114) est inférieure à l'épaisseur de la pièce en tôle (140) sur laquelle l'élément (110) doit être fixé.

8. Elément fonctionnel selon l'une des revendications précédentes 1 à 6,
**caractérisé en ce que**
l'épaisseur axiale de la bride annulaire (14) est nettement supérieure à l'épaisseur de la pièce en tôle (40) sur laquelle l'élément (10) doit être fixé.

9. Elément fonctionnel selon l'une des revendications 2 à 8,
**caractérisé en ce que**
les caractéristiques de blocage antirotation (38 ; 138) présentent la forme de becs qui sont prévus sur la surface conique (16 ; 116).

10. Elément fonctionnel selon la revendication 9,
**caractérisé en ce que**
les becs de blocage antirotation (38 ; 138) s'étendent dans des plans axiaux.

11. Elément fonctionnel selon la revendication 9 ou 10,
**caractérisé en ce que**
les becs de blocage antirotation (38 ; 138) s'étendent depuis la bride annulaire (14 ; 114) jusqu'à la portion à riveter (20 ; 120) ou jusqu'à la partie de col (18 ; 118).

12. Elément fonctionnel selon l'une des revendications précédentes 2 à 8,
**caractérisé en ce que**
les caractéristiques de blocage antirotation présentent la forme de renfoncements prévus dans la surface conique.

13. Elément fonctionnel selon la revendication 12,
**caractérisé en ce que**
les renfoncements formant les caractéristiques de blocage antirotation sont agencés dans des plans axiaux de l'élément fonctionnel.

14. Elément fonctionnel selon l'une des revendications précédentes,
**caractérisé en ce que**
le côté (39 ; 139) de la bride annulaire (14 ; 114) détourné de la surface conique constitue une surface de support pour un composant qui doit être fixé sur la pièce en tôle (40 ; 140) au moyen de l'élément fonctionnel (10 ; 110).

15. Elément fonctionnel selon la revendication 14,
**caractérisé en ce que**
l'épaisseur axiale de la bride annulaire (14) est choisie pour réaliser une fonction d'écartement entre la pièce en tôle (40) et un composant monté sur la pièce en tôle au moyen de l'élément fonctionnel (10).

16. Elément fonctionnel selon l'une des revendications précédentes,
**caractérisé en ce que**
il s'agit d'un élément formant écrou (10) dans lequel la partie de corps (12) est pourvue d'un perçage central (26).

17. Elément fonctionnel selon l'une des revendications précédentes 1 à
14,
**caractérisé en ce que**
il s'agit d'un élément de boulon (110) pourvu d'une partie de tige (113) agencée sur le côté (134) de la bride annulaire (114) détourné de la portion à riveter (120).

18. Elément fonctionnel selon l'une des revendications précédentes,
**caractérisé en ce que**
plusieurs becs de blocage antirotation sont prévus sur la surface conique de l'élément fonctionnel, s'étendent de préférence sur toute la longueur de la surface conique dans un plan axial et sont répartis de préférence régulièrement autour de l'axe longitudinal de l'élément fonctionnel.

19. Elément fonctionnel selon l'une des revendications précédentes,
**caractérisé en ce que**
les becs de blocage antirotation s'étendent en direction axiale sur une partie au moins de la longueur axiale de la portion cylindrique (20), **en ce que** l'extrémité frontale libre de la portion cylindrique est réalisée de préférence sous forme de portion poinçonnée et **en ce qu'**après le montage de l'élément fonctionnel sur une pièce en tôle le matériau des becs de blocage antirotation s'étendant le long de la portion cylindrique (20) est déplacé en direction axiale pour former, aux emplacements des becs de blocage antirotation, des saillies de matériau qui s'étendent radialement vers l'extérieur et qui viennent se retrouver dans la zone de bord de l'ouverture de la conformation conique de la pièce en tôle.

20. Composant d'assemblage constitué par un élément fonctionnel (10), comme par exemple un élément formant écrou (10) ou un élément boulon (110), en particulier selon l'une des revendications 1 à 19, comportant une partie de corps (12) ou une partie de tête (112), qui présente une bride annulaire (14 ; 114) et qui se transforme en une portion à riveter (20 ; 120) cylindrique, élément qui est fixé sur une pièce en tôle (40 ; 140),
**caractérisé en ce que**
la transition de la bride annulaire (14 ; 114) vers la portion à riveter (20 ; 120) est formée par une surface (16 ; 116) au moins sensiblement conique qui constitue une surface d'appui pour la pièce en tôle (40 ; 140), **en ce que** la surface conique (16 ; 116) s'étend depuis un côté inférieur annulaire (34 ; 134), appartenant à la surface d'appui de l'élément fonctionnel, de la bride annulaire (14 ; 114) en direction de la portion à riveter jusqu'à la portion à riveter (20 ; 120) ou jusqu'à la limite (36) d'une partie de col (18) prévue entre la surface conique (16 ; 116) et la portion à riveter, **en ce que** la pièce en tôle présente une zone conique (42 ; 142) qui prend appui contre la surface d'appui conique de l'élément fonctionnel, la zone conique de la pièce en tôle étant serrée entre le côté (34 ; 134) de la bride annulaire (14 ; 114) tourné vers la portion à riveter (20 ; 120) et un bourrelet annulaire (50 ; 150) constitué par la portion à riveter.

21. Composant d'assemblage selon la revendication 20,
**caractérisé en ce que**
il est prévu des caractéristiques de blocage antirotation (38 ; 138) dans la zone de la surface conique de l'élément fonctionnel, et **en ce que** le matériau de tôle de la pièce en tôle (40 ; 140) est en engagement par coopération de formes avec les caractéristiques de blocage antirotation dans la zone conique (42 ; 142).

22. Composant d'assemblage selon la revendication 20 ou 21,
**caractérisé en ce que**
la longueur axiale de la surface conique (16 ; 116) correspond au moins approximativement à l'épaisseur de la tôle.

23. Composant d'assemblage selon l'une des revendications précédentes 20 à 22,
**caractérisé en ce que**
l'angle de cône enfermé (α) de la surface conique (16 ; 116) est dans la plage entre 80° et 120° et s'élève en particulier à environ 90°.

24. Composant d'assemblage selon l'une des revendications précédentes 20 à 23,
**caractérisé en ce que**
la surface conique (16 ; 116) se transforme en la portion à riveter (20 ; 120) via une partie de col (18 ; 118) au moins sensiblement cylindrique.

25. Composant d'assemblage selon la revendication 24,
**caractérisé en ce que**
la partie de col (18 ; 118) présente une longueur axiale qui correspond au moins approximativement à l'épaisseur de tôle et est de préférence légèrement supérieure à cette dernière.

26. Composant d'assemblage selon l'une des revendications précédentes 20 à 25,
**caractérisé en ce que**
l'épaisseur axiale de la bride annulaire (114) est inférieure à l'épaisseur de la pièce en tôle (140).

27. Composant d'assemblage selon l'une des revendications précédentes 20 à 25,
**caractérisé en ce que**
l'épaisseur axiale de la bride annulaire (14) est nettement supérieure à l'épaisseur de la pièce en tôle (40).

28. Composant d'assemblage selon l'une des revendications 20 à 27,
**caractérisé en ce que**
les caractéristiques de blocage antirotation (38 ; 138) présentent la forme de becs qui sont prévus sur la surface conique (16 ; 116).

29. Composant d'assemblage selon la revendication 28,
**caractérisé en ce que**
les becs de blocage antirotation (38 ; 138) s'étendent dans des plans axiaux.

30. Composant d'assemblage selon la revendication 28 ou 29,
**caractérisé en ce que**
les becs de blocage antirotation (38 ; 138) s'étendent depuis la bride annulaire (14 ; 114) jusqu'à la portion à riveter (20 ; 120) ou jusqu'à la partie de col (18 ; 118).

31. Composant d'assemblage selon l'une des revendications précédentes 20 à 27,
**caractérisé en ce que**
les caractéristiques de blocage antirotation présentent la forme de renfoncements prévus dans la surface conique.

32. Composant d'assemblage selon la revendication 31,
**caractérisé en ce que**
les renfoncements formant les caractéristiques de blocage antirotation sont agencés dans des plans axiaux de l'élément fonctionnel.

33. Composant d'assemblage selon l'une des revendications précédentes 20 à 32,
**caractérisé en ce que**
le côté (39 ; 139) de la bride annulaire détourné de la surface conique (16 ; 116) constitue une surface de support pour un composant qui doit être fixé sur la pièce en tôle (40 ; 140) au moyen de l'élément fonctionnel (10 ; 110).

34. Composant d'assemblage selon la revendication 33,
**caractérisé en ce que**
l'épaisseur axiale de la bride annulaire (14) est choisie pour réaliser une fonction d'écartement entre la pièce en tôle (40) et un composant monté sur la pièce en tôle au moyen de l'élément fonctionnel (10).

35. Composant d'assemblage selon l'une des revendications précédentes 20 à 34,
**caractérisé en ce que**
il s'agit d'un élément formant écrou (10) dans lequel la partie de corps (12) est pourvue d'un perçage central (26).

36. Composant d'assemblage selon l'une des revendications précédentes 20 à 35,
**caractérisé en ce que**
le bourrelet annulaire (50) est formé par déplacement du matériau de la portion à riveter (20).

37. Composant d'assemblage selon la revendication 36,
**caractérisé en ce que**
le bourrelet annulaire (50) constitue, conjointement avec la partie de col (18) de l'élément fonctionnel (10), un logement de serrage pour le bord (48) de l'ouverture (44) de la zone conique (42) de la pièce en tôle (40), ce qui a pour effet qu'une partie du bourrelet annulaire (50) se trouve sur le côté de la zone conique (42) de la pièce en tôle (40), qui est opposé à la bride annulaire (14).

38. Composant d'assemblage selon la revendication 36 ou 37,
**caractérisé en ce que**
une zone cylindrique (30) de la portion à riveter (20) est non déformée et s'étend en éloignement du bourrelet annulaire (50) en direction axiale (24) de l'élément fonctionnel (10) sur le côté opposé à la bride annulaire.

39. Composant d'assemblage selon l'une des revendications 20 à 35,
**caractérisé en ce que**
la portion à riveter (120) est rabattue autour du bord (148) de l'ouverture (144) de la zone conique (142) de la pièce en tôle (140).

40. Composant d'assemblage selon l'une des revendications 20 à 39,
**caractérisé en ce que**
la zone conique de l'élément fonctionnel s'étend au moins sensiblement sur toute la zone de tôle qui se trouve en contact physique avec l'élément après le rivetage de l'élément fonctionnel sur la pièce en tôle.

41. Composant d'assemblage selon l'une des revendications précédentes avec un élément fonctionnel selon la revendication 19,
**caractérisé en ce que**
le matériau résultant des becs de blocage antirotation sur la portion cylindrique de l'élément prend appui aux emplacements des caractéristiques de blocage antirotation dans la zone de bord de l'ouverture de la conformation conique de la pièce en tôle et s'engage de préférence en coopération de formes dans ce positionnement afin d'obtenir d'une part un blocage antirotation supplémentaire à cet emplacement et de bloquer d'autre part l'élément dans la pièce en tôle à l'encontre des forces d'extraction ou d'éjection qui agissent dans la direction de la portion cylindrique jusqu'à la partie de corps ou la partie de tête de l'élément fonctionnel.

42. Procédé pour monter un élément fonctionnel selon l'une des revendications 1 à 19 ou pour réaliser un composant d'assemblage selon l'une des revendications 20 à 41,
**caractérisé en ce que**
on prévoit un renfoncement conique (42) dans une pièce en tôle (40) dont l'angle de cône (α) correspond au moins sensiblement à l'angle de cône (α) de la surface conique (16) de l'élément fonctionnel (10), un trou (44) étant prévu dans le renfoncement conique (42) et concentriquement à celui-ci, dont le diamètre correspond au moins sensiblement au diamètre de la portion à riveter (20) de l'élément fonctionnel ou et légèrement supérieur à celui-ci, **en ce que** la portion à riveter (20) de l'élément fonctionnel (10) est menée à travers le trou (44) du renfoncement conique (42) de la pièce en tôle, de sorte que la zone conique du renfoncement conique (42) vient approximativement en appui avec la surface conique (16) de l'élément fonctionnel et la bride annulaire (14) vient en appui avec la pièce en tôle (40), et **en ce qu'**un bourrelet annulaire (50) est constitué à partir du matériau de la portion à riveter (20) qui reçoit avec serrage la zone conique de la pièce en tôle entre la bride annulaire (14) et elle-même.

43. Procédé selon la revendication 42,
**caractérisé en ce que**
la réalisation du bourrelet annulaire (50) s'effectue par déplacement d'une zone de la portion à riveter (20) de l'élément fonctionnel (10) et **en ce que** le matériau de tôle de la pièce en tôle (40) est soutenu pendant ce déplacement dans une matrice qui amène le matériau de tôle dans la zone conique en engagement avec des caractéristiques de blocage antirotation de l'élément fonctionnel.

44. Procédé selon la revendication 42,
**caractérisé en ce que**
le bourrelet annulaire (150) est formé par rabattement de la portion à riveter (120), et **en ce que** lors du rabattement ou après celui-ci, le matériau de tôle est soutenu dans une matrice qui amène le matériau de tôle dans la zone conique (140) en engagement avec des caractéristiques de blocage antirotation de l'élément fonctionnel.

45. Procédé selon la revendication 42,
**caractérisé en ce que**
pour le formage du renfoncement conique dans la pièce en tôle, la pièce en tôle soutenue sur une matrice est poinçonnée par l'extrémité frontale libre de la portion cylindrique (20) de l'élément et est mis en forme du renfoncement conique dans un évidement formé en correspondance dans la matrice.

46. Procédé selon la revendication 45,
**caractérisé en ce que**
la pastille de poinçonnage qui résulte lors du poinçonnage de la pièce en tôle est enfoncée dans un passage de la matrice par la portion cylindrique de l'élément fonctionnel, et elle est évacuée via ce passage, c'est-à-dire que l'élément fonctionnel forme lui-même un poinçon.

47. Procédé selon l'une des revendications 44 à 46,
**caractérisé en ce que**
à la place de la réalisation d'un bourrelet annulaire à partir du matériau de la portion à riveter, le matériau de becs de blocage antirotation prévus en surélévation sur la portion cylindrique de l'élément fonctionnel mène à des saillies radiales par déplacement du matériau en direction axiale de la portion cylindrique vers la partie de corps de l'élément fonctionnel, déplacement qui est provoqué par la matrice utilisée, lesdites saillies se situant aux emplacements des becs de blocage antirotation et prenant appui contre la zone de bord de l'ouverture de la conformation conique de la pièce en tôle et venant de s'engager dans celle-ci de préférence par coopération de formes.
